(19) Europäisches Patentamt
European Patent Office
Office européen des brevets

(11) Veröffentlichungsnummer: **0 373 256**
**A1**

(12) # EUROPÄISCHE PATENTANMELDUNG

(21) Anmeldenummer: **88121154.4**

(22) Anmeldetag: **16.12.88**

(51) Int. Cl.5: **C23F 11/02, B65D 81/26, B29C 47/00, B05D 7/02**

(43) Veröffentlichungstag der Anmeldung: **20.06.90 Patentblatt 90/25**

(84) Benannte Vertragsstaaten: **CH DE FR IT LI NL SE**

(71) Anmelder: **INSTITUT MEKHANIKI METALLOPOLIMERNYKH SISTEM AKADEMII NAUK BELORUSSKOI SSR**
**Ulitsa Kirova, 32a**
**Gomel(SU)**

(72) Erfinder: **Pinchuk, Leonid Semenovich**
**ulitsa Petchenko, 14, kv. 17**
**Gomel(SU)**
Erfinder: **Aleshkevich, Elena Nikolaevna**
**ulitsa Jubileinaya, 4, kv. 99**
**Gomel(SU)**
Erfinder: **Goldade, Viktor Antonovich**
**ulitsa Kozhara, 5, kv. 30**
**Gomel(SU)**
Erfinder: **Liberman, Semen Yankelievich**
**ulitsa B.Khmelnitskogo, 108, kv. 27**
**Gomel(SU)**
Erfinder: **Rechits, Grigory Vladimirovich**
**ulitsa Fedjuninskogo, 6, kv. 88**
**Gomel(SU)**
Erfinder: **Parkalova, Ekaterina Ivanovna**
**ulitsa Fedjuninskogo, 6, kv. 82**
**Gomel(SU)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **Verfahren zur Herstellung einer polymeren Korrosionsschutz-Schlauchfolie.**

(57) Das Verfahren zur Herstellung einer polymeren Korrosionsschutz-Schlauchfolie sieht das Extrudieren eines Gemisches von thermoplastischem Polymer mit einem Korrosionsinhibitor in flüssiger Phase oder seiner Lösung in einem Weichmacher, genommen in einer seiner Verträglichkeitsgrenze mit dem angegebenen Polymer übersteigenden Menge, das Aufblasen dieser Schmelze zu Schläuchen unter Abkühlung und das Aufbringen einer Lack- bzw. Emailschicht auf die Außenfläche des entstehenden Schlauches vor der Kristallisationslinie vor, wobei der Lack bzw. das Email mit dem angegebenen thermoplastischen Polymer nicht verträglich ist und sich durch die Differenz zwischen Lösungsparametern des Lacks bzw. Emails und des genannten Korrosionsinhibitors oder seiner Lösung im Weichmacher unter 8 kennzeichnet.

EP 0 373 256 A1

## VERFAHREN ZUR HERSTELLUNG EINER POLYMEREN KORROSIONSSCHUTZ-SCHLAUCHFOLIE

Die Erfindung bezieht sich auf die Herstellung von Korrosionsschutzmitteln mit Hilfe chemisch beständiger Werkstoffe, welche Metallgegenstände gegen atmosphärische Einflüsse und korrodierende Agenzien schützen, und insbesondere betrifft sie ein Verfahren zur Herstellung einer polymeren Korrosionsschutz-Schlauchfolie.

Eines der meist verbreiteten Verfahren zum Korrosionsschutz von Metallen ist heute Konservation und Verpackung von Metallgegenständen in hermetische Beutel aus polymeren Folien, welche Korrosionsschutzeigenschaften aufweisen. Bei der Herstellung von polymeren Korrosionsschutz-Schlauchfolien haben Verfahren eine breite Verwendung gefunden, die im Extrudieren von Mischungen bestehen, welche Korrosionsinhibitoren in der Gasphase und Kontaktkorrosionsinhibitoren für Metalle in ihrem Bestand enthalten.

Bekannt ist ein Verfahren zur Herstellung einer polymeren Korrosionsschutz-Schlauchfolie, bei dem eine Mischung auf der Basis von Polyethylen extrudiert wird, welche pulverförmige Korrosionsinhibitoren in der Gasphase, d.h. ein Gemisch der organischen Salze von $\beta$-Dicyclohexylamin, $\beta$-Cyclohexylammoniumnitrit und Nitrosodicyclohexylamin enthalten. Die erhaltene Schmelze wird durch Luft bei der Abkühlung zu Schläuchen aufgeblasen.

Die so erhaltene Schlauchfolie enthält einen bedeutenden Teil des eingekapselt vorliegenden Korrosionsinhibitors, der beim Gebrauch der Folie auf ihren beiden Seiten frei wird. Dies hat die Verschlechterung der Korrosionsschutzeigenschaften der Folie und den unproduktiven Verlust an Korrosionsinhibitor zur Folge.

Bekannt ist ein Verfahren zur Herstellung einer polymeren Korrosionsschutz-Schlauchfolie, das im Extrudieren der Schmelze von Polyethylen und Aufblasen derselben zu Schläuchen besteht, wobei man einen fein verteilten pulverförmigen Korrosionsinhibitor auf die Innenfläche des entstehenden Schlauches durch Druckluft gleichzeitig aufbringt (SU, A, 859178).

Wegen ungenügender Diffusion des pulverförmigen Korrosionsinhibitors ins Volumen der Folie und seiner geringen Haftung an der Folie zeigt die letztgenannte eine beschränkte Schutzdauer. Das Sortiment derartiger Korrosionsinhibitoren reicht außerdem nicht aus. Diese Verfahren hat deshalb keine breite Anwendung gefunden.

Bekannt ist ein Verfahren zur Herstellung einer zweischichtigen polymeren Korrosionsschutzfolie, das darin besteht, daß man die Folie, hergestellt aus einer Mischung auf der Basis von Polyethylen und Korrosionsinhibitoren in der Gasphase, auf der Seite der mit einem Haftmittel im voraus überzogenen Fläche mit einer handelsüblichen polymeren Folie laminiert. Das Verfahren ist in technologischer Hinsicht schwierig auszuführen und zeichnet sich durch eine hoe Arbeits- und Materialintensität aus.

Bekannt ist ferner ein Verfahren zur Herstellung einer polymeren Korrosionsschutz-Schlauchfolie (SU, A, 768225), bei dem die Schmelze des Gemisches aus thermoplastischem Polymer mit einem Korrosionsinhibitor in flüssiger Phase oder seiner Lösung in einem Weichmacher, genommen in einer die Verträglichkeitsgrenze desselben mit dem angegebenen Polymer übersteigenden Menge, extrudiert und dann bei der Abkühlung zu Schläuchen aufgeblasen wird.

Dieses Verfahren ist mit unproduktiven Verlusten an Korrosionsinhibitor infolge seiner Abscheidung und Verdampfung von den beiden Seiten der Schlauchfolie verbunden. Dies führt ebenfalls zur Verkürzung der Schutzdauer von in diese Folie verpackten Metallgegenständen.

Die Erfindung liegt die Aufgabe zugrunde, ein Verfahren zur Herstellung einer polymeren Korrosionsschutz-Schlauchfolie in der Weise, daß man auf die Außenfläche des Schlauches Reagenzien aufbringt, die die Abscheidung des Korrosionsinhibitors darauf verhindern, zu entwickeln, das eine längere Schutzdauer der erhaltenen Folie bewirkt.

Diese Aufgabe wird dadurch gelöst, daß ein Verfahren zur Herstellung einer polymeren Korrosionsschutz-Schlauchfolie vorgeschlagen wird, das im Extrudieren der Schmelze des Gemisches von thermoplastischem Polymer mit einem Korrosionsinhibitor in flüssiger Phase oder seiner Lösung in einem Weichmacher, genommen in einer seine Verträglichkeitsgrenze mit dem angegebenen Polymer übersteigenden Menge, und anschließendem Aufblasen der Schmelze bei der Abkühlung zu Schläuchen besteht, wobei erfindungsgemäß auf die Außenfläche des entstehenden Schlauches vor der Kristallisationslinie eine Lack- oder Emailschicht aufgebracht wird, wobei der Lack und der Firniss mit dem angegebenen thermoplastischen Polymer nicht verträglich sind und sich durch die Differenz zwischen Lösungsparametern des Lacks bzw. Firnisses und des genannten Korrosionsinhibitors oder seiner Lösung im Weichmacher unter 8 auszeichnen.

Das erfindungsgemäße Verfahren zur Herstellung einer polymeren Korrosionsschutz-Schlauchfolie ist in

technologischer und apparativer Gestaltung einfach und macht es möglich, folgende Vorteile zu erzielen:
- die Schutzdauer der polymeren Folie, die zur Verpackung und Konservation von Metallgegenständen verwendet wird, zu verlängern;
- den unproduktiven Verlust an Korrosionsinhibitoren infolge ihrer Abscheidung nur der Innenfläche der Schlauchfolie herabzusetzen und dadurch die Arbeitsbedingungen bei der Verpackung von Metallgegenständen in die, toxische Inhibitoren enthaltende, Folie zu verbessern;
- die Möglichkeit, die Folie mit Lacken und Überzugsmasse von verschiedener Farbe zu markieren, vorzusehen sowie der Verpackung ein dekoratives Aussehen mittels Anstrichstoffen zu verleihen, die mit den polymeren Stoffen als Foliengrundlage nicht verträglich sind.

Das Wesen der vorliegenden Erfindung besteht darin, daß die entstehende Schlauchfolie aus Bestandteilen zusammengesetzt wird, die bei der Vereinigung mit dem aufzubringenden Lack oder Email einen Überzug auf der Außenfläche dieser Folie ergeben können, die aus dem thermoplastischen, in diesen Lacken und Emails nicht löslichen Polymer hergestellt ist.

Der physikalische Sinn des erfindungsgemäßen Verfahrens kann wie folgt erläutert werden. Beim Extrudieren eines aus thermoplastischem Polymer und einer bestimmten Menge von mit diesem verträglichen Bestandteilen in der flüssigen Phase bestehenden Gemisches (Korrosionsinhibitoren oder ihre Lösungen in einem Weichmacher) geht das polymere Material in den gelartigen Zustand über. Das polymere Gel wird durch das Vorliegen des polymeren Gerüsts (Matrix) charakterisiert, welches das System von 10 bis 30 µm grossen kommunizierenden Poren, eingefüllt mit Flüssigphasenkomponenten (Dispersionsflüssigkeit), aufweist. Der Prozeß der spontanen Flüssigkeitsabgabe aus der Matrix (die sogenannte Synärese) beeinflußt bedeutend den Komplex von Korrosionsschutz- und Bearbeitungseigenschaften der Korrosionsschutzfolien. Dadurch, daß man der Dispersionsflüssigkeit antiseptische Stoffe und/oder Klebstoffe zusetzt, erhält man Verpackungsfolien, welche neben Korrosionsschutzeigenschaften, z.B. auch Konservations- und Dichtungseigenschaften, besitzen.

In vielen Fällen richtet sich das Korrosionsverhalten solcher Folien nach der Kinetik der Absonderung von flüchtigen Komponenten, zum Beispiel von Korrosionsinhibitoren. Bei Verpackungsfolien ist von Bedeutung, daß die Absonde rung von Korrosionsinhibitoren in der Gasphase nur von jener Folienseite erfolgt, die dem zu verpackenden Erzeugnis zugewandt ist. Die Erfüllung dieser Bedingung wirkt sich in hohem Maße auf die Schutzdauer der Verpackungsfolien und somit auf die Lagerungszeit der Metallgegenstände aus.

Das erfindungsgemäße Verfahren sieht einen Arbeitsgang vor, bei dem eine Lack- oder Emailschicht auf die Außenfläche des aus einem thermoplastischen Polymer entstehenden Schlauches vor seiner Kristallisationslinie, d.h. beim Vorliegen dieses Polymers im Gelzustand aufgebracht wird.

Der Zweck dieses Arbeitsgangs ist es, die Absonderung des Korrosionsinhibitors in der Gasphase oder seiner Lösung im Weichmacher von der Außenfläche des polymeren Schlauches zu verhindern. Um diese Aufgabe zu lösen, reicht es aus, die Austrittsöffnungen der kommunizierenden Poren in der polymeren Matrix zu blockieren. Das besondere Merkmal des Verfahrens liegt darin, daß die Folienstruktur Lacke und Emails zu verwenden ermöglicht, die die polymere Matrix nicht auflösen. Als notwendige Anforderung, die an Lacke und Emails gestellt wird, gilt die Verträglichkeit mit der Dispersionsflüssigkeit der polymeren Matrix, die durch die Differenz zwischen Lösungsparametern dieser Lacke oder Emails und der angegebenen Flüssigkeit bestimmt wird, wobei diese Differenz 8 nicht übersteigt.

Wird diese Bedingung erfüllt, so benetzt die aufzubringende Flüssigkeit, indem sie von der Außenfläche der Folie abfließt, die polymere Gelmatrix nicht, hält sich jedoch auf den Abschnitten auf, welche dem Austreten von Komponenten in der flüssigen Phase auf die Folienfläche entsprechen. Lacke und Firnisse dringen in Poren der polymeren Matrix nach dem Diffusionsmechanismus ein und bilden beim Erstarren eigenartige Stopfen, die die Diffusionsflüssigkeitsabgabe auf die Folienfläche von der Außenfläche des Schlauches hemmen. Somit wird das Austreten des Korrosionsinhibitors aus der Folienfläche erschwert.

Da die Löslichkeit von Stoffen mit abnehmender Differenz ihrer Löslichkeitsparameter $\sigma = (E/V)^{1/2}$ zunimmt, worin E und V Verdampfungsenergie bzw. Molvolumen der Komponente sind, so wird der größte Effekt beim erfindungsgemäßen Verfahren bei $\sigma_1 - \sigma_2 = 0$ erreicht, worin $\sigma_1$ Dispersionsflüssigkeit und $\sigma_2$ Email oder Lack betrifft. Übersteigt die Differenz $\sigma_1 - \sigma_2$ 8, weist der genannte Überzug auf der Außenfläche der Schlauchfolie eine ungenügende Adhäsion auf, wodurch der Korrosionsinhibitor oder seine Lösung im Weichmacher auf die genannte Folienfläche austritt.

Das erfindungsgemäße Verfahren zur Herstellung einer polymeren Korrosionsschutz-Schlauchfolie wird wie folgt durchgeführt. Das Gemisch von thermoplastischem Polymer mit der Lösung des Korrosionsinhibitors im Weichmacher wird durch ein Schlitzwerkzeug extrudiert, an dessen Austritt die Schmelze durch Luft zu Schlauch aufgeblasen und gleichzeitig abgekühlt wird. Der Lackanstrich auf der Außenfläche des entstehenden Schlauches wird auf dem Abschnitt von Austritt der Schmelze aus dem Spritzkopf bis zur Kristallisationslinie der Folie aufgebracht.

Die Temperatur der Schmelze am Spritzkopfaustritt liegt um 30 bis 80° C höher als die Schmelztemperatur des Polymers. Die Temperatur der entstehenden Folie nach dem Verlassen des Spritzkopfes übersteigt die Schmelztemperatur (Fließtemperatur) des Polymers innerhalb der Aufblaszeit (5 bis 10 s) des Schlauches. Innerhalb dieser Zeitspanne befindet sich die Folie im Zustand einer Kolloidlösung des Polymers mit Komponenten in der Flüssigphase.

Nach dem Verlassen der Kristallisationslinie wird die Kolloidlösung durch Abkühlung in Gel umgewandelt, dessen Poren mit der Lösung des Korrosionsinhibitors im Weichmacher eingefüllt sind. Durch Aufbringen der Überzugs auf die Außenfläche der Folie kommt es dazu, daß der Lack oder das Email in die Folienporen eingezogen werden, wobei diese von der Außenfläche des Schlauches her blockiert werden.

Dadurch wird die Verdampfung des Inhibitors von der Aussenfläche des polymeren Schlauches praktisch zum Stehen gebracht.

Die Trocknung der Überzüge erfolgt im Laufe des Aufblasens des Schlauches durch seine Belüftung bei einer zwischen 50 und 60° C liegenden Temperatur oberhalb der Kristallisationslinie der Schmelze. Der Schlauch wird mit 20 bis 50° C warmem Lack oder Email überzogen, der Lack-oder Emailverbrauch liegt zwischen 2 und 10 g/m$^2$ Folie.

Als thermoplastische Polymere können Polyethylen niedriger Dichte PND ( $\rho$ = 900 bis 939 kg/m$^3$), Polypropylen PP ( $\rho$ = 900 bis 910 Kg/m$^3$) und Suspensionspolyvinylchlorid PVC-S ( $\rho$ = 1390 bis 1400 kg/m$^3$) dienen.

Als Weichmacher sind folgende technologische Flüssigkeiten, bedingt bezeichnet durch Buchstaben a, b, c zweckmäßigerweise zu verwenden:

a) reinstes mineralisches Destillatöl mit folgenden Daten: Dichte 0,894 g/cm$^3$ bei 20° C, Viskosität $49 \bullet 10^{-6}$ m$^2$/s bei 20° C und $20 \bullet 10^{-6}$ m$^2$/s bei 50° C, Stockpunkt minus 45° C, Flammpunkt im offenen Tiegel 163° C;

b) rein minerales Selektivraffinat ohne Zusätze, hergestellt aus schwefelarmen paraffinischen und paraffinarmen Erdölen mit folgenden Hauptdaten:
Dichte 0,89 g/cm$^3$ bei 20° C, Viskosität $14 \bullet 10^{-6}$ m$^2$/s bei 20° C, Aschegehalt höchstens 0,003 %, Säurezahl 0,25 mg KOH/g, Stockpunkt minus 30° C, Flammpunkt im geschlossenen Tiegel 200° C;

c) meta-Kresol ($CH_3C_6H_4OH$), Schmelztemperatur 11° C, Siedepunkt 203° C, löslich in Wasser, Alkoholen, Benzol, Chloroform und Aceton.

Als Korrosionsinhibitoren können beispielsweise folgende Produkte, bedingt bezeichnet durch Buchstaben A, B, C dienen:

A) gelbe bis hellbraune Flüssigkeit auf der Basis der technischen Fraktion von sekundären Fettsäureaminen und Acrylnitril der allgemeinen Strukturformel

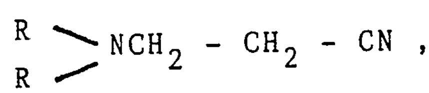

worin R = $C_nH_{2n+1}$ und n = 7 bis 9 sind; Dichte 0,85 g/cm$^3$ bei 20° C, Viskosität $6 \bullet 10^{-6}$ m$^2$/s bei 40° C, Stockpunkt minus 40° C, Siedepunkt 190° C bei 1,33 kPa Druck, Selbst entzüngungspunkt 260° C, löslich in Ölen, organischen Lösungsmitteln, Wasser, Flüchtigkeit 13,3 Pa bei 20° C;

B) Gemisch von Salzen des Dicyclohexylamins (43 Masse-%) und synthetischer Fettsäuren mit 10 bis 20 Kohlenstoffatomen (57 Masse-%) der allgemeinen Formel
$(C_6H_{11})_2NHC_nH_{2n+1}COOH$,
ein pastöses Produkt mit 0,92 g/cm$^3$ Dichte, Schmelzpunkt 15 bis 20° C, löslich in Ölen und organischen Lösungsmitteln, Flüchtigkeit 0,013 Pa bei 20° C;

C) Salz von Cyclohexylamin und synthetischen Fettsäuren mit 7 bis 11 Kohlenstoffatomen in der Kette ($C_nH_{2n+1}COOC_6H_{11}NH_2$), ein pastöses hellbraunes Produkt mit Stockpunkt minus 12° C, alkohol-, mineralöl-, benzin- und acetonlöslich.

Zum Aufbringen der Überzugsschichten auf die polymere Schlauchfolie kann man zum Beispiel folgende Stoffe, bedingt bezeichnet durch Buchstaben L, M, N verwenden:

L) Lösung von Zellulosenitrat im Gemisch von Lösungsmitteln und Verdünnungsmitteln unter Weichmacherzusatz als durchsichtige Flüssigkeit mit Trockensubstanz von mindestens 19 %;

M) Lack auf der Basis von Alkydharz und butanolarmem Harz mit einem Pigment, z.B. Zinkweiß, mit 0,1 bis 5,0 µm grossen Teilchen;

N) Pentaphthalatlack als Suspension von Titandioxid in Rutilform und anderen Pigmenten und Füllstoffen in Pentaphthalatlack unter Lösungsmittelzusatz.

Bei der Prüfung der Eigenschaften der nach dem erfindungsgemäßen und bekannten Verfahren hergestellten polymeren Korrosionsschutz-Schlauchfolien schätzte man das Aussehen des Überzugs, seine Folienhaftfestigkeit und das Korrosionsverhalten dieser Folie ein.

Das Korrosionsverhalten von Folien wurde im Schnellversuch geprüft. Prüfkörper aus Stahl (Kohlenstoffstahl mit einem Kohlenstoffgehalt von 0,05 bis 0,11 Masse-%), deren Abmessungen 25x25x0,8 mm betragen, wurden dazu von Korrosionsprodukten mechanisch gereinigt, mit Ethylalkohol gewaschen, in 5%iger NaOH-Lösung in Anwesenheit von granuliertem Zink bei einer zwischen 80 und 90° C liegenden Temperatur innerhalb von 30 Minuten behandelt, dann wieder mit Ethylalkohol und mit destilliertem Wasser gewaschen und getrocknet. Hiernach wurden die Stahlprüfkörper in die hergestellte polymere Korrosionsschutzfolie hermetisch verpackt, in eine Wärme-Feuchtigkeitskammer eingebracht und auf eine Temperatur von 40 ± 2° C unter Halten bei dieser Temperatur innerhalb von 8 Stunden cyclisch erhitzt, während sie in der restlichen Zeit des Tages zur Abkühlung auf Raumtemperatur bei Luftfeuchtigkeit von 100 % stehengelassen wurden. Die Vergleichsergebnisse, erhalten im Laufe von Prüfungen der nach den verschiedenen Verfahren hergestellten Folien, wurden in Punkten ausgedrückt, die den Korrosionsschaden von in diese Folien verpackten Stahlprüfkörpern angaben. Der Korrosionsschadensgrad wurde nach der Größe des Korrosionsangriffs auf der Oberfläche von Stahlprüfkörpern in Einheiten der Zehnpunktwertungsskala (Tabelle 1) ermittelt. Man hielt dabei für Korrosionsschaden Korrosionsherde auf der Oberfläche des Stahlprüfkörpers in Form von einzelnen Punkten, Flecken, Fäden, Narben sowie Änderung der Oberflächenfarbe und des Oberflächenglanzes.

TABELLE 1

| Korrosionsschadensfläche | Punkte |
|---|---|
| 1 | 2 |
| 0 | 0 |
| 0...0,05 | 1 |
| 0,05...0,10 | 2 |
| 0,10...0,30 | 3 |
| 0,30...0,50 | 4 |
| 0,50...1,00 | 5 |
| 1,00...3,00 | 6 |
| 3,00...5,00 | 7 |
| 5,00...10,00 | 8 |
| 10,00...30,00 | 9 |
| 30,00...50,00 und mehr | 10 |

Nachstehend werden Beispiele für die konkrete Ausführung des erfindungsgemäßen Verfahrens angeführt.

Beispiel 1

Zur Herstellung einer polymeren Korrosionsschutz-Schlauchfolie wird eine Mischung, die 85 Masse-% Polyethylen niedriger Dichte (PND) und Lösung von 5 Masse-% Inhibitor A in 10 Masse-% Weichmacher a mit $\sigma$ = 17,48 enthält, extrudiert. Die Temperatur im Spritzkopf wird bei 140° C gehalten. Am Spritzkopfaustritt wird die gewonnene Schmelze durch Luft zu einem Schlauch aufgeblasen, wobei gleichzeitig auf ihre Außenfläche der Lack L vor der Kristallisationslinie aufgebracht wird, die 60 cm weit von dem Spritzkopf liegt. Der Lack L weist $\sigma$ = 19,93 auf. Der Aufblasekoeffizient der Schmelze zu Schlauch beträgt $k = D/d = 4$, worin D den Durchmesser des entstehenden Schlauches, d den Durchmesser des Formschlitzes im Spritzkopf bedeuten. Die Längsziehgeschwindigkeit $V = V_1/V_2 = 6$, worin $V_1$ die Austrittsgeschwindigkeit der Folie von Abzugswalzen und $V_2$ die Extrusionsgeschwindigkeit bedeuten.

Die so erhaltene Schlauchfolie hat eine Schutzschicht auf ihrer Außenfläche, die die Absonderung und die Verdampfung des Korrosionsinhibitors A der Gasphase verhindert. Die Korrosionsschutzeigenschaften der Folie sind in der Tabelle 2 angegeben.

Beispiel 2

Die polymere Korrosionsschutz-Schlauchfolie wird analog zu Beispiel 1 hergestellt. Die extrudierbare Mischung besteht aus Polypropylen (PP) und einer Lösung des Inhibitors B im Weichmacher b mit $\sigma$ = 26,36. Die Temperatur im Spritzkopf wird bei 250° C gehalten und auf die Außenfläche des entstehenden Schlauches wird das Email M mit $\sigma$ = 18,36 aufgespritzt. Die Schutzschicht verhindert den Austritt und die Verdampfung des Inhibitors B in die Gasphase. Die Korrosionsschutzeigenschaften der Folie sind in der Tabelle 2 angegeben.

Beispiel 3

Die polymere Korrosionsschutz-Schlauchfolie wird analog zu Beispiel 1 hergestellt. Die zu extrudierende Mischung besteht dabei aus Polyvinylchlorid (PVC) und Lösung des Inhibitors C im Weichmacher c mit $\sigma$ = 22,56. Die Temperatur im Spritzkopf wird bei 115° C gehalten und auf die Außenfläche des entstehenden Schlauches wird der Lack N durch Aufspritzen aufgebracht, wobei $\sigma$ = 15,75 ist. Diese Lackschicht verhindert den Austritt und die Verdampfung des Inhibitors c in die Gasphase. Die Korrosionsschutzeigenschaften der Folie sind in der Tabelle 2 angegeben.

Beispiel 4 (Vergleichsbeispiel)

Die polymere Korrosionsschutz-Schlauchfolie wird nach dem in SU, A, 768225 beschriebenen Verfahren hergestellt. Die Folie wird dazu analog zu Beispiel 1 extrudiert. Die Lackschicht wird dabei auf den Schlauch nicht aufgebracht. Man stellt die Folie ohne Schutzschicht auf der Oberfläche her, die den Austritt des Korrosionsinhibitors verhindert. Die Korrosionsschutzeigenschaften der Folie sind in der Tabelle 2 angegeben.

Beispiel 5 (Vergleichsbeispiel)

Die polymere Schlauchfolie wird aus Polyethylen niedriger Dichte ohne Korrosionsinhitibor wie in Beispiel 1 hergestellt. Die Korrosionsschutzeigenschaften sind in der Tabelle 2 angegeben.

Beispiel 6 (Vergleichsbeispiel

Die polymere Schlauchfolie wird wie in Beispiel 5 hergestellt, mit Ausnahme, daß man auf die Außenfläche des entstehenden Schlauches vor der Kristallisationslinie (60 cm) den Lack L durch Aufspritzen aufbringt. Die Korrosionsschutzeigenschaften sind in der Tabelle 2 angegeben.

Beispiel 7 (Vergleichsbeispiel)

Die polymere Schlauchfolie wird wie in Beispiel 1 hergestellt, nur daß der Lack L durch Aufspritzen oberhalb seiner Kristallisationslinie aufgebracht wird. Die Korrosionsschutzeigenschaften sind in der Tabelle 2 angegeben.

TABELLE 2

| Folie dem Beispiel gemäß | Grad des Korrosionsschadens in Punkten nach Prüfungen von Prüfkörpern innerhalb von 24 Stunden | | | | | |
|---|---|---|---|---|---|---|
| | 5 | 10 | 15 | 20 | 25 | 30 |
| 1 | 2 | 3 | 4 | 5 | 6 | 7 |
| 1 | 0 | 0 | 0 | 0 | 0 | 0 |
| 2 | 0 | 0 | 0 | 0 | 0 | 0 |
| 3 | 0 | 0 | 0 | 0 | 0 | 0 |
| 4 | 0 | 0 | 0 | 1 | 1 | 2 |
| 5 | 1 | 3 | 5 | 6 | 6 | 7 |
| 6 | 1 | 2 | 5 | 5 | 6 | 6 |
| 7 | 0 | 0 | 0 | 1 | 2 | 3 |

Die in der Tabelle 2 dargestellten Ergebnisse zeigen, daß die besten Korrosionsschutzeigenschaften die nach dem erfindungsgemäßen Verfahren hergestellte Folie (Beispiel 1 bis 3) aufweist. Ein Korrosionsschaden von in diese Folie eingepackten Prüfkörpern kam nicht zutage. Auf den Prüfkörpern, eingepackt in die nach dem Verfahren gemäß SU,A, 768225 (Beispiel 4) hergestellte Folie, traten schon nach 20 Tagen Prüfung. Korrosionsspuren gleichzeitig auf. Die inhibitorfreie Polyethylenfolie (Beispiel 5) und selbst die Folie mit dem darauf aufgebrachten Überzug (Beispiel 6) sichern die Konservation von Stahlprüfkörpern nicht.

Vergleichsweise gibt die Tabelle 2 die Korrosionsschutzeigenschaften der Folie mit dem auf den Schlauch oberhalb der Kristallisationslinie aufgebrachten Überzug (Beispiel 7) an. In diesem Fall unterscheidet sich die Folie in ihren Eigenschaften von der nach dem Verfahren gemäß SU,A, 768225 hergestellten Folie praktisch nicht.

Überzüge auf einer Polyethylenfolie, erzeugt durch einen beliebigen der erfindungsgemäßen Lacke oder ein beliebiges der erfindungsgemäßen Emaile(Beispiel 6) blättern von der Folie als Basis bei der Gitterschnittprüfung ab. Lacke und Emaile benetzen die Folie nicht und bilden Unstetigkeiten und Farbflecke. Auf den nach dem erfindungsgemäßen Verfahren hergestellten Folien (Beispiel 1 bis 3) haben die Überzüge eine gleichmäßige Dicke und blättern beim Gitterschnitt nicht ab.

Somit weist die nach dem erfindungsgemäßen Verfahren hergestellte polymere Korrosionsschutz-Schlauchfolie eine längere Schutzdauer auf, welche durch zweckmäßige Verwendung des in der Folienstruktur vorliegenden Korrosionsinhibitors sowie durch Herabsetzen des unproduktiven Ver brauchs des Inhibitors über die Außenfläche des entstehenden Schlauches erreicht wird. Das erfindungsgemäße Verfahren ist außerdem in technologischer und apparativer Gestaltung genügend einfach.

## Industrielle Anwendbarkeit

Die nach dem erfindungsgemäßen Verfahren hergestellte polymere Korrosionsschutz-Schlauchfolie läßt sich als Material für Konservation und Verpackung zum Schutz von Metallgegenständen gegen atmosphärische Einflüsse verwenden.

## Ansprüche

Verfahren zur Herstellung einer polymeren Korrosionsschutz-Schlauchfolie, das im Extrudieren der Schmelze eines Gemisches von thermoplastischem Polymer mit einem Korrosionsinhibitor in flüssiger Phase oder seiner Lösung in einem Weichmacher, genommen in einer seine Verträglichkeitsgrenze mit dem angegebenen Polymer übersteigenden Menge, und im anschließenden Aufblasen der Schmelze bei der Abkühlung zu Schläuchen besteht, dadurch **gekennzeichnet,** daß auf die Außenfläche des entstehenden Schlauches vor der Kristallisationslinie eine Lack- bzw. Emailschicht aufgebracht wird, wobei der Lack bzw. das Email mit dem angegebenen thermoplastischen Polymer nicht verträglich ist und sich durch die Differenz zwischen Lösungsparametern des Lacks bzw. Emails und des genannten Korrosionsinhibitors

oder seiner Lösung im Weichmacher unter 8 kennzeichnet.

Europäisches Patentamt

# EUROPÄISCHER RECHERCHENBERICHT

Nummer der Anmeldung

EP 88 12 1154

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | SU-A- 768 225 (ANALYTIC EQUIPT CON)<br>--- | EINZIGER | C 23 F 11/02<br>B 65 D 81/26<br>B 29 C 47/00<br>B 05 D 7/02 |
| A | GB-A-2 187 466 (INSTITUT MEKHANIKI METALLOPOLIMERN.)<br>* Seite 2, Zeilen 3-43 *<br>--- | EINZIGER | |
| A | GB-A-2 188 274 (INSTITUT MEKHANIKI METALLOPOLIMERN.)<br>* Seite 2, Zeilen 6-28 *<br>--- | EINZIGER | |
| A | US-A-4 248 576 (BIRKIS et al.)<br>* Zusammenfassung *<br>----- | EINZIGER | |

RECHERCHIERTE SACHGEBIETE (Int. Cl.5)

B 29 C
B 05 D
C 23 F
B 65 D

Der vorliegende Recherchenbericht wurde für alle Patentansprüche erstellt

| Recherchenort | Abschlußdatum der Recherche | Prüfer |
|---|---|---|
| DEN HAAG | 08-08-1989 | ATTALLA G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)